# FASCICULE DE BREVET EUROPEEN

(11) **EP 2 091 768 B1**
(45) Date de publication et mention de la délivrance du brevet: **28.04.2010**
(21) Numéro de dépôt: 07871827.7
(22) Date de dépôt: 10.12.2007
(51) Int. Cl.: B60H 1/34

(54) **AÉRATEUR À RÉGLAGE D 'ORIENTATION ET DE DÉBIT D'UN FLUX D'AIR**
LÜFTER MIT LUFTSTROMAUSRICHTUNG UND FLUSSRATENEINSTELLUNG
AERATOR WITH AIR FLOW ORIENTATION AND FLOW-RATE ADJUSTMENT

(30) Priorité: 11.12.2006 FR 0610773
(43) Date de publication de la demande: 26.08.2009
(73) Titulaire: Faurecia Interieur Industrie, 92000 Nanterre (FR)
(72) Inventeur: AZZOUZ, Loys, F-95240 Cormeilles-en-Parisis (FR); ERCOLANO, Tony, F-60139 Wavignies (FR); GUERREIRO, Pierre, 95600 EAUBONNE (FR)
(74) Mandataire: Domenego, Bertrand
(86) Numéro de dépôt international: PCT/FR2007/002032
(87) Numéro de publication internationale: WO 2008/084148

(56) Documents cités:
- FR-A- 2 886 384
- FR-A- 2 886 385
- FR-A1- 2 784 624

## Description

La présente invention concerne un aérateur à réglage d'orientation et de débit, par exemple du type utilisé à l'intérieur des automobiles, notamment sur une planche de bord.

Le document FR-2 886 384, qui est considéré comme l'art antérieur le plus proche, décrit un aérateur à réglage d'orientation et de débit qui comporte un conduit de flux d'air ayant une chambre qui forme un segment sphérique, un corps profilé de dimension nettement inférieure à celle de la chambre, et une bague dont la surface extérieure forme une partie de sphère de même rayon que le segment sphérique de la chambre ; la bague est munie de bras portant le corps profilé par coopération avec des gorges du corps profilé, orientées pratiquement dans la direction de circulation du flux d'air. De cette manière, le corps profilé peut être déplacé en rotation par rapport à la chambre du conduit, grâce au glissement de la bague contre le segment sphérique. De plus, le corps profilé peut être déplacé en translation par rapport à la bague sans que celle-ci ne se déplace par rapport à la chambre.

Dans un mode de réalisation, il est indiqué que le corps profilé peut être poussé vers l'entrée du conduit afin qu'il forme un obturateur du conduit.

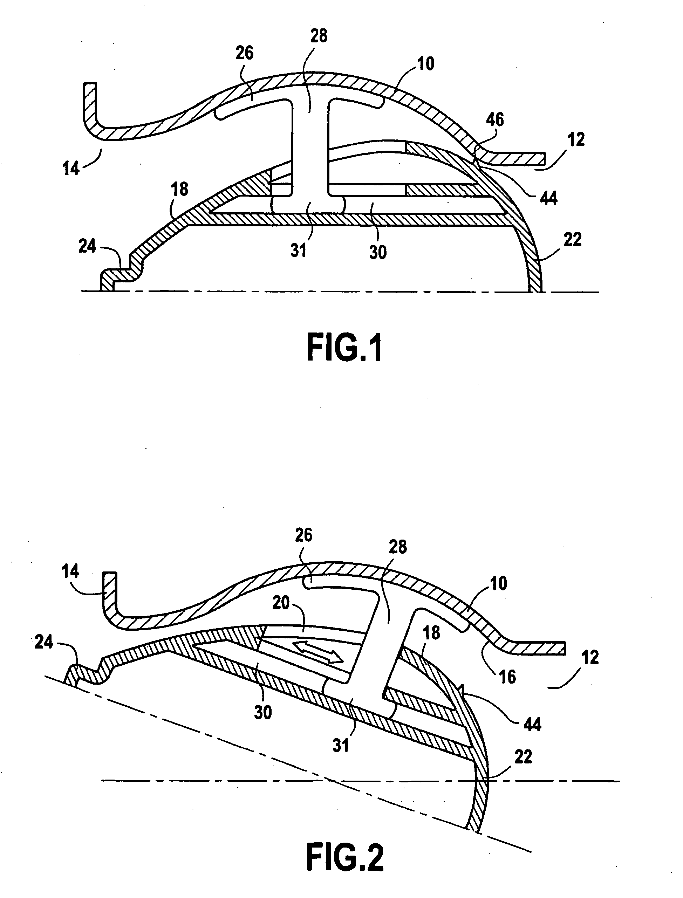

La figure 1 représente un tel aérateur ayant un conduit 10 qui délimite un segment sphérique au contact duquel est disposée une bague 26 qui possède des bras 28 ayant une extrémité 31 qui peut coulisser dans une gorge longitudinale 30 formée dans le corps profilé 18. Celui-ci possède une surface arrière 22, proche de l'entrée 12 du conduit, qui porte une lèvre 44 qui peut venir au contact d'une partie 46 du conduit 10, opposée à la sortie 14 au niveau de laquelle le corps profilé peut être saisi par une saillie 24 formant organe de tenue.

On s'est rendu compte que, comme l'indique la figure 2, lorsque le corps profilé 18 est incliné par rapport à la direction d'écoulement du flux d'air, il n'était pas possible d'obtenir un contact complet du corps profilé 18 avec l'entrée 12 du conduit 10. En conséquence, lorsque l'utilisateur pousse le corps profilé vers l'intérieur par la saillie 24, lorsque la corps 18 arrive en bout de course, la surface 22 vient au contact d'un côté du conduit 10, alors que le côté opposé laisse un espace important pour la circulation de l'air. En pratique, dans une telle position inclinée, l'utilisateur n'obtient pas un débit nul.

Pour que le débit de l'aérateur soit nul, il faut que l'utilisateur place la direction de translation du corps profilé dans l'alignement de l'axe de circulation d'air ou axe de l'aérateur, mais rien ne lui indique qu'il doit effectuer un telle opération.

L'invention a pour objet de résoudre le problème posé par cette absence de fermeture en position inclinée du corps profilé. Dans un premier mode de réalisation, un organe limiteur de course empêche le déplacement de translation vers la position de fermeture tant que l'axe du corps profilé n'est pas aligné sur l'axe de l'aérateur, si bien qu'un utilisateur ressent cet empêchement et sait qu'il n'a pas obturé l'aérateur. Il peut alors essayer de tourner le corps profilé pour aligner les deux axes.

Dans un second mode de réalisation, l'organe limiteur de course est associé à un organe de guidage de sorte que, lorsque l'utilisateur pousse le corps profilé en voulant fermer l'aérateur, le corps profilé est progressivement amené dans une position proche de l'alignement des deux axes dans laquelle la fermeture étanche est obtenue entre le corps profilé et le conduit.

Plus précisément, l'invention concerne un aérateur à réglage d'orientation et de débit, du type qui comprend un conduit du flux d'air ayant, entre une entrée et une sortie délimitant une direction de circulation, au moins une chambre dont une partie au moins de la surface intérieure forme un segment sphérique, un corps profilé dont la plus grande partie au moins est disposée dans la chambre du conduit, afin que le flux d'air circule dans la chambre autour du corps profilé, le corps profilé ayant un dispositif de tenue disposé du côté de la sortie, et une bague qui a une surface extérieure formant une portion de sphère de même rayon pratiquement que le segment sphérique de la chambre avec lequel elle coopère, la bague étant disposée dans la chambre et supportant le corps profilé dans le conduit en permettant un déplacement du corps profilé en rotation par rapport au conduit et en translation par rapport à la bague suivant un axe de translation, le corps profilé, dans son mouvement de déplacement en translation par rapport à la bague, pouvant prendre une position de fermeture dans laquelle il est sensiblement au contact du conduit et l'obture. Selon l'invention, le corps profilé est muni d'un organe limiteur de course qui limite la course de déplacement en translation du corps profilé par rapport à la bague lorsque l'axe de translation du corps profilé par rapport à la bague est notablement incliné par rapport à la direction de circulation.

De préférence, le corps profilé a une partie circulaire centrée sur l'axe de translation et qui forme une surface d'obturation du conduit.

De préférence, la bague possède au moins un bras qui dépasse vers l'intérieur de la bague et est destiné à supporter le corps profilé en permettant son déplacement en translation.

Dans une variante, le corps profilé a au moins une gorge dans laquelle une partie du bras est destinée à coulisser dans une direction ayant au moins une composante dans la direction de translation.

Dans une autre variante, le corps profilé a une partie cylindrique qui coulisse dans un anneau solidaire des bras de la bague.

De préférence, la bague possède au moins trois bras.

De préférence, une lèvre d'étanchéité au moins est disposée sur l'un des éléments choisis parmi le conduit et le corps profilé et est destinée à venir au contact de l'autre des éléments choisis parmi le conduit et le corps profilé à l'emplacement auquel le corps profilé est pratiquement au contact du conduit.

Dans un mode de réalisation, l'organe limiteur de course comprend plusieurs saillies ayant chacune une section de faible largeur dans un plan de perpendiculaire à l'axe de translation. Par exemple, chaque saillie est sous forme d'une ailette contenue dans un plan qui contient l'axe de translation du corps profilé. De préférence, les saillies sont disposées au contact du corps profilé à l'intérieur de la surface d'obturation.

Dans un autre mode de réalisation, l'organe limiteur de course constitue en outre un organe de guidage qui, par contact avec la paroi du conduit, a tendance à provoquer l'alignement de l'axe de translation sur la direction de circulation lorsque la surface d'obturation se rapproche de la position de contact avec le conduit. Par exemple, l'organe limiteur et de guidage comporte une saillie effilée suivant l'axe de translation et disposée sensiblement au centre de la surface d'obturation.

De préférence, la chambre et le corps profilé sont pratiquement de révolution.

De préférence, l'aérateur comporte en outre un dispositif de maintien en position du corps profilé dans le conduit.

D'autres caractéristiques et avantages de l'invention seront mieux compris à la lecture de la description qui va suivre d'exemples de réalisation, faite en référence aux dessins annexés sur lesquels, les figures 1 et 2 ayant déjà été décrites :
les figures 3 et 4 sont des coupes d' aérateur, avec un corps profilé en partie en coupe, respectivement lorsque les axes du corps profilé et de l'aérateur sont alignés et lorsqu'ils ne sont pas alignés, dans un mode de réalisation d'organe limiteur de course ; et
les figures 5 et 6 sont analogues aux figures 3 et 4, mais représentent un mode de réalisation dans lequel l'organe limiteur de course constitue aussi un organe de guidage du corps profilé selon l'invention.

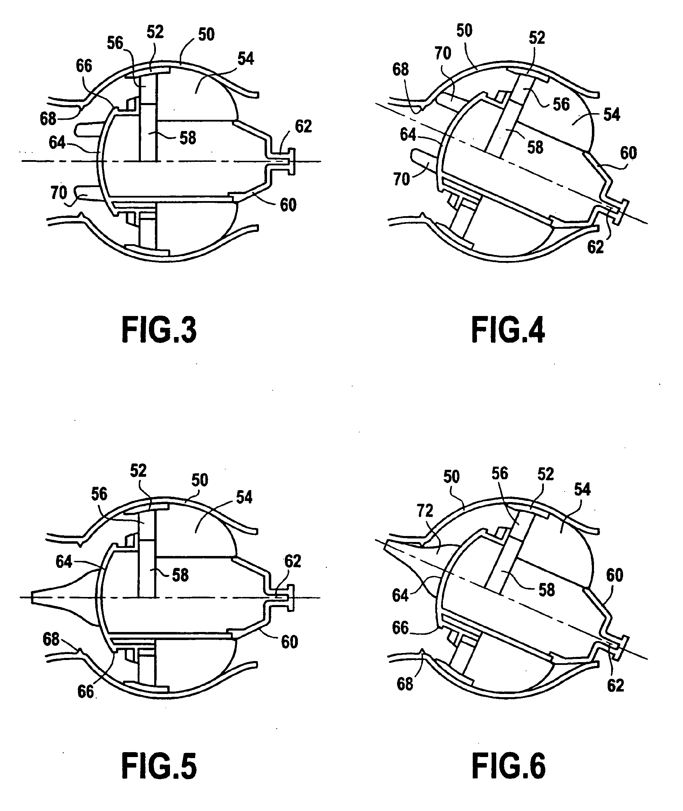

Les figures 3 et 4 représentent un premier mode de réalisation d'aérateur selon l'invention.

Sur ces figures, un conduit fixe 50 délimite une chambre en forme de segment sphérique à la surface interne de laquelle peut se déplacer une bague 52 associée à des ailettes 54 orientées dans la direction d'écoulement du flux d'air. La bague 52 est munie de bras 56 qui, dans le mode de réalisation considéré, portent un anneau 58 dans lequel peut coulisser un corps profilé 60. Ce corps 60 peut être saisi par un organe de tenue ou saillie 62 par l'utilisateur de l'aérateur qui veut régler celui-ci.

Du côté opposé à la saillie 62, le corps profilé 60 a une surface 64 d'obturation de l'orifice du conduit, cette surface ayant à sa périphérie une lèvre 66 qui peut venir coopérer avec l'intérieur du conduit. Dans une variante, c'est l'intérieur du conduit qui a une lèvre 68.

Comme l'indique la figure 3, lorsqu'une pression est exercée sur la saillie 62 vers l'intérieur de l'aérateur, le corps profilé 60 se déplace vers l'intérieur de l'aérateur, sans rotation de la bague 52, jusqu'à ce que la surface arrière 64 de l'aérateur vienne au contact du conduit 50 par la lèvre 66 et/ou 68 et assure une fermeture étanche de l'aérateur.

On note sur la figure 3 que le corps profilé 60 comporte un organe limiteur de course qui empêche le déplacement en translation et est constitué de saillies 70 en forme d'ailettes orientées dans la direction d'écoulement du flux d'air. Dans la position de la figure 3, ces ailettes 70 n'ont aucun rôle. Par contre, dans la position de la figure 4, c'est-à-dire lorsque le profilé 60 a pivoté par rapport au conduit 50 pour que le flux d'air soit dirigé obliquement sur la figure 4, une saillie 70 au moins est au contact de l'intérieur du conduit 50 ou est proche de ce contact.

Ainsi, si un utilisateur veut fermer l'aérateur et exerce une pression sur la saillie 62 afin que le corps profilé 60 soit poussé vers l'arrière, il ne peut effectuer ce déplacement parce que la saillie 70 est au contact du conduit. L'utilisateur sait donc qu'il n'a pas fermé l'aérateur et, pour obtenir cette fermeture, il tente de déplacer le corps profilé 60 pour aligner pratiquement l'axe de translation du corps profilé sur l'axe de l'aérateur, c'est-à-dire qu'il rapproche le corps profilé de l'orientation représentée sur la figure 3.

Les figures 5 et 6 représentent un autre mode de réalisation dans lequel les saillies 70 sont remplacées par un organe de guidage 72. Cet organe a une forme effilée vers l'arrière, c'est-à-dire du côté opposé au corps profilé, et son extrémité est toujours en dehors de la chambre dans laquelle se déplace la bague 52.

Avec l'orientation de la figure 5, la fermeture de l'aérateur est tout à fait analogue à celle qu'on a décrite en référence à la figure 3. Par contre, avec l'orientation de la figure 6, lorsque l'utilisateur veut fermer l'aérateur et exerce une pression vers l'arrière sur la saillie 62, l'organe limiteur et de guidage 72 glisse le long de la lèvre 68 ou du conduit en provoquant une rotation du corps profilé 60 et de la bague 52 vers une orientation proche de l'orientation d'alignement telle que représentée sur la figure 5. (En réalité, la fermeture est obtenue dans une certaine plage angulaire d'environ 15 à 20° de chaque côté de la position d'alignement des axes, la surface 64 d'extrémité du corps profilé étant plus étendue que la section du conduit au niveau de la lèvre 68).

Bien qu'on ait décrit la présence de lèvres 66 et 68, celles-ci ne sont que éventuelles, ou une seule suffit. Elles peuvent aussi avoir d'autres emplacements, soit sur le corps profilé, soit sur le conduit.

Bien qu'on ait décrit un corps profilé 60 dont le déplacement en translation est obtenu par glissement dans un anneau 58 d'une portion de corps profilé de forme cylindrique, toute autre configuration est envisageable, notamment telle que représentée sur les figures 1 et 2.

Dans tous les modes de réalisation, l'organe limiteur de course, qu'il assure un guidage ou non, doit se trouver à l'intérieur du cercle délimité par le contact du corps profilé 60 avec la partie de conduit arrière.

Lorsque l'organe limiteur de course est formé de saillies empêchant la translation, il est avantageux que ces saillies aient la forme d'ailettes afin qu'elles créent la perte de charge la plus faible possible dans le flux d'air d'aération. Par contre, lorsque l'organe limiteur assure un guidage, il peut avoir une forme profilée qui prolonge celle du corps profilé 60. Il est cependant avantageux qu'il crée lui aussi une perte de charge aussi faible que possible, surtout lorsque le corps profilé est dans une position de forte inclinaison du flux d'air, telle qu'indiquée sur la figure 6.

Bien entendu, l'aérateur selon l'invention peut comporter divers perfectionnements, notamment tels que décrits dans le document précité FR-2 886 384.

Dans les modes de réalisation des figures 4 à 6, les ailettes 54 qui sont solidaires de la bague 52 assurent un guidage efficace du corps profilé lorsqu'il est orienté en rotation dans toutes les directions dans la chambre du conduit 50. Bien que cette disposition présente l'avantage de permettre une réduction de la surface de la bague 52 qui est au contact de la chambre, les dispositions représentées dans le document précité, en particulier concernant un dispositif de maintien en position de la bague, peuvent être utilisées selon l'invention.

## Revendications

1. Aérateur à réglage d'orientation et de débit d'un flux d'air, du type qui comprend :
un conduit (50) du flux d'air ayant, entre une entrée et une sortie délimitant une direction de circulation, au moins une chambre dont une partie au moins de la surface intérieure forme un segment sphérique,
un corps profilé (60) dont la plus grande partie au moins est disposée dans la chambre du conduit, afin que le flux d'air circule dans la chambre autour du corps profilé, le corps profilé (60) ayant un dispositif (62) de tenue disposé du côté de la sortie, et
une bague (52) qui a une surface extérieure formant une portion de sphère de même rayon pratiquement que le segment sphérique de la chambre avec lequel elle coopère, la bague (52) étant disposée dans la chambre et supportant le corps profilé (60) dans le conduit (50) en permettant un déplacement du corps profilé (60) en rotation par rapport au conduit (50) et en translation par rapport à la bague (52) suivant un axe de translation,
le corps profilé (60), dans son mouvement de déplacement en translation par rapport à la bague (52), pouvant prendre une position de fermeture dans laquelle il est sensiblement au contact du conduit et l'obture,
**caractérisé en ce que**
le corps profilé (60) est muni d'un organe limiteur de course (70, 72) qui limite la course de déplacement en translation du corps profilé (60) par rapport à la bague (52) lorsque l'axe de translation du corps profilé (60) par rapport à la bague (52) est notablement incliné par rapport à la direction de circulation.

2. Aérateur selon la revendication 1, **caractérisé en ce que** le corps profilé (60) a une partie circulaire (64) centrée sur l'axe de translation et qui forme une surface d'obturation du conduit (50).

3. Aérateur selon l'une des revendications 1 et 2, **caractérisé en ce que** la bague (52) possède au moins un bras (56) qui dépasse vers l'intérieur de la bague (52) et est destiné à supporter le corps profilé (60) en permettant son déplacement en translation.

4. Aérateur selon l'une quelconque des revendications 1 à 3, **caractérisé en ce que** le corps profilé (60) a au moins une gorge (30) dans laquelle une partie (31) du bras est destinée coulisser dans une direction ayant au moins une composante dans la direction de translation.

5. Aérateur selon l'une quelconque des revendications 1 à 3, **caractérisé en ce que** le corps profilé (60) a une partie cylindrique qui coulisse dans un anneau (58) solidaire des bras (56) de la bague (52).

6. Aérateur selon l'une quelconque des revendications précédentes, **caractérisé en ce que** l'organe limiteur de course comprend plusieurs saillies (70) ayant chacune une section de faible largeur dans un plan perpendiculaire à l'axe de translation.

7. Aérateur selon la revendication 6, **caractérisé en ce que** chaque saillie (70) est sous forme d'une ailette contenue dans un plan qui contient l'axe de translation du corps profilé (60).

8. Aérateur selon l'une quelconque des revendications 1 à 5, **caractérisé en ce que** l'organe limiteur (72) constitue en outre un organe de guidage qui, par contact avec la paroi du conduit (50), a tendance à provoquer l'alignement de l'axe de translation sur la direction de circulation lorsque la surface d'obturation (64) se rapproche de la position de contact avec le conduit (50).

9. Aérateur selon la revendication 8, **caractérisé en ce que** l'organe limiteur et de guidage (72) comporte une saillie effilée suivant l'axe de translation et disposée sensiblement au centre de la surface d'obturation (64).

10. Aérateur selon l'une quelconque des revendications précédentes, **caractérisé en ce qu'**il comporte en outre un dispositif de maintien en position du corps profilé (60) dans le conduit (50).

## Claims

1. An aerator with air flow orientation and flow-rate adjustment of the type comprising:
an air flow duct (50) having, between an inlet and an outlet defining a circulation direction, at least one chamber of which at least one portion of the inner surface forms a spherical segment,
a profiled body (60) of which at least the largest portion is disposed in the chamber of the duct so that the air flow circulates in the chamber around the profiled body, the profiled body (60) having a holding device (62) disposed to the side of the outlet, and
a ring (52) which has an outer surface forming a portion of a sphere having practically the same radius as the spherical segment of the chamber with which it co-operates, the ring (52) being disposed in the chamber and supporting the profiled body (60) in the duct (50) and allowing rotational movement of the profiled body (60) relative to the duct (50) and translatory movement relative to the ring (52) according to a translation axis,
the profiled body (60), in its translatory displacement movement relative to the ring (52), being able to adopt a closure position wherein it is substantially in contact with the duct and blocks the latter,
**characterised in that**
the profiled body (60) is equipped with a stroke limiting component (70, 72) which limits the translation movement stroke of the profiled body (60) relative to the ring (52) when the translation axis of the profiled body (60) relative to the ring (52) is notably inclined relative to the direction of circulation.

2. The aerator according to Claim 1, **characterised in that** the profiled body (60) has a circular portion (64) centred on the translation axis and which forms a blocking surface of the duct (50).

3. The aerator according to either of Claims 1 and 2, **characterised in that** the ring (52) has at least one arm (56) which sticks out towards the inside of the ring (52) and is intended to support the profiled body (60) by allowing it to move translatorily.

4. The aerator according to any of Claims 1 to 3, **characterised in that** the profiled body (60) has at least one groove (30) in which a portion (31) of the arm is intended to slide in a direction having at least one component in the translation direction.

5. The aerator according to any of Claims 1 to 3, **characterised in that** the profiled body (60) has a cylindrical portion which slides into an annulus (58) integrated into the arms (56) of the ring (52).

6. The aerator according to any of the preceding claims, **characterised in that** the stroke limiting component comprises a number of projections (70) each having a section with a small width in a plane perpendicular to the translation axis.

7. The aerator according to Claim 6, **characterised in that** each projection (70) is in the form of a fin contained in a plane which includes the translation axis of the profiled body (60).

8. The aerator according to any of Claims 1 to 5, **characterised in that** the limiting component (72) constitutes, furthermore, a guide component which, due to contact with the wall of the duct (50), tends to cause alignment of the translation axis over the direction of circulation when the blocking surface (64) comes close to the position of contact with the duct (50).

9. The aerator according to Claim 8, **characterised in that** the limiting and guiding component (72) comprises a tapered projection following the translation axis and disposed substantially in the centre of the blocking surface (64).

10. The aerator according to any of the preceding claims, **characterised in that** it further comprises a device for keeping the profiled body (60) in position in the duct (50).

## Patentansprüche

1. Belüfter zur Regelung der Richtung und des Durchsatzes eines Luftstroms, mit:
einer Leitung (50) für den Luftstrom, bei der zwischen einem Einlaß und einem Auslaß, die die Richtung der Zirkulation begrenzen, wenigstens eine Kammer vorgesehen ist, die wenigstens zu einem Teil der inneren Oberfläche ein kugelförmiges Segment bildet,
einem profilierten Körper (60), dessen wenigstens größter Teil in der Kammer der Leitung angeordnet ist, so dass der Luftstrom in der Kammer um den profilierten Körper herum strömt, welcher profilierte Körper (60) eine Einrichtung (62) zum Verschließen auf der Seite des Auslasses aufweist,
einem Ring (52), der eine äußere Oberfläche aufweist, die einen Teil einer Kugel darstellt, die denselben Radius aufweist wie das Kugelsegment der Kammer, mit dem er zusammenwirkt, welcher Ring (52) in der Kammer angeordnet ist und den profilierten Körper (60) in der Leitung (50) abstützt, wobei eine Bewegung des profilierten Körpers (60) in Drehrichtung in bezug auf die Leitung (50) und in Translationsrichtung in bezug auf den Ring (52) entlang einer Translationsachse zugelassen ist, wobei der profilierte Körper (60) bei seiner Translationsverschiebung in bezug auf den Ring (52) eine Position zum Verschließen aufweisen kann, in der er ersichtlich in Berührung mit der Leitung steht und diese verschließt,
**dadurch gekennzeichnet, dass** der profilierte Körper (60) mit einem Begrenzungsorgan (70,72) für die Bewegung des Körpers versehen ist, die die Verschiebung des Körpers (60) in Translationsrichtung in bezug auf den Ring (52) begrenzt, wenn die Translationsachse des profilierten Körpers (60) in bezug auf den Ring (50) nennenswert in bezug auf die Zirkulationsrichtung begrenzt ist.

2. Belüfter gemäß Anspruch 1, **dadurch gekennzeichnet, dass** der profilierte Körper (60) einen kreisförmigen Bereich (64) aufweist, der um die Translationsachse zentriert ist und eine Verschlußfläche für die Leitung (50) bildet.

3. Belüfter gemäß einem der Ansprüche 1 und 2, **dadurch gekennzeichnet, dass** der Ring (52) wenigstens einen Arm (56) aufweist, der in Richtung des inneren des Ringes (52) verläuft und bestimmt ist zur Abstützung des profilierten Körpers (60) bei Gestattung der Translationsverschiebung.

4. Belüfter nach einem der Ansprüche 1 bis 3, **dadurch gekennzeichnet, dass** der profilierte Körpers (60) wenigstens eine Nut (30) aufweist in der ein Teil (31) des Armes in Richtung wenigstens einer Komponente der Translationsrichtung verschiebbar ist.

5. Belüfter nach einem der Ansprüche 1 bis 3, **dadurch gekennzeichnet, dass** der profilierte Körper (60) einen zylindrischen Bereich aufweist, der in einem Ring (58) verschiebbar ist, der einstückig mit dem Arm (56) des Ringes (52) verbunden ist.

6. Belüfter nach einem der vorhergehenden Ansprüche, **dadurch gekennzeichnet, dass** das Organ zur Begrenzung der Verschiebung mehrere Vorsprünge (70) aufweist, die jeweils einen relativ geringen Querschnitt in einer Ebene senkrecht zur Translationsachse aufweisen.

7. Belüfter nach Anspruch 6, **dadurch gekennzeichnet, dass** jeder der Vorsprünge (70) die Form eines Flügels aufweisen, der in einer Ebene liegt, die die Translationsachse des profilierten Körpers (60) enthält.

8. Belüfter gemäß einem der Ansprüche 1 bis 5, **dadurch gekennzeichnet, dass** das Organ (72) zur Begrenzung im übrigen ein Führungsorgan bildet, das durch Berührung mit der Wand der Leitung (50) bestrebt ist, die Ausrichtung der Translationsachse in Richtung der Strömung zu provozieren, wenn die Verschlußfläche (64) der Kontaktposition mit der Leitung (50) angenähert wird.

9. Belüfter gemäß Anspruch 8, **dadurch gekennzeichnet, dass** das Begrenzungsorgan und das Führungsorgan (72) einen spitzen Anschlag aufweist, der der Translationsachse folgt und im wesentlichen im Zentrum der Verschluß-oberfläche (64) angeordnet ist.

10. Belüfter nach einem der vorhergehenden Ansprüche, **dadurch gekennzeichnet, dass** der Belüfter im übrigen einen Einrichtung zum Halten des profilierten Körpers (60) in seiner Position in der Leitung (50) aufweist.
